# EUROPEAN PATENT APPLICATION

(11) **EP 4 836 162 A2**
(43) Date of publication of application: **04.11.2026**
(21) Application number: 26206082.5
(22) Date of filing: 27.04.2023
(51) Int. Cl.: H01M 50/451

(54) **SEPARATOR FOR NON-AQUEOUS SECONDARY BATTERY, AND NON-AQUEOUS SECONDARY BATTERY**

(30) Priority: 28.04.2022 JP 2022075141
(62) Document number(s) of the earlier application(s) in accordance with Art. 76 EPC: 23796523.1 / 4 517 998
(71) Applicant: TEIJIN LIMITED, Kita-ku, Osaka-shi, Osaka 530-0005 (JP)
(72) Inventor: Kuratani, Rika, Osaka, 530-0005 (JP); Okazaki, Masato, Osaka, 530-0005 (JP); Sato, Megumi, Osaka, 530-0005 (JP)
(74) Representative: Berggren Oy

(57) **Abstract**

In one embodiment of the present invention, provided is a separator for a nonaqueous secondary battery, the separator including: a porous substrate; and a porous layer that is provided on one side or on both sides of the porous substrate, and that contains a resin and barium compound particles, in which an average primary particle diameter of the barium compound particles contained in the porous layer is from 0.30 µm to less than 0.50 µm, and in which a volume ratio of the barium compound particles to a volume of the porous layer excluding pores is more than 5% by volume and less than 70% by volume.

## Description

### Technical Field

The present disclosure relates to a separator for a non-aqueous secondary battery and a non-aqueous secondary battery.

### Background Art

PTL 1 discloses a separator for a battery having a heat-resistant porous layer containing barium sulfate particles and an organic synthetic resin component, in which a content of the barium sulfate particles contained in the heat-resistant porous layer is 70% by volume or more and 96% by volume or less of the total volume of the barium sulfate particles and the organic synthetic resin component, and is 1.8 g/m² or more and 19.8 g/m² or less.

PTL 2 discloses a separator for a lithium secondary battery containing an X-ray detectable component, in which the X-ray detectable component contains a mixture of at least two components selected from the group consisting of a metal, a metal oxide, a metal phosphate, a metal carbonate, an X-ray fluorescent substance, a metal salt, a metal sulfate, and a mixture thereof.

PTL 3 discloses a separator for a non-aqueous secondary battery in which barium sulfate particles contained in a heat-resistant porous layer have an average primary particle diameter of from 0.01 µm to less than 0.30 µm.
PTL 1: WO2021/029397
PTL 2: JP2021-093376A
PTL 3: WO2019/146155

### SUMMARY OF INVENTION

### Technical Problem

Displacement between an electrode and a separator inside a battery causes a short circuit and ignition of the battery. In order to improve the safety of the battery, there is a demand for a technique for detecting the displacement between the electrode and the separator from the outside of the battery in a manufacturing process of the battery.

A current collector of the electrode is generally a metal foil and does not transmit X-rays. The position of the electrode inside the battery can be detected from the outside of the battery by an imaging method (for example, X-ray CT (X-ray Computed Tomography)) in which X-rays are irradiated. Further, when the separator is a separator having a low X-ray permeability, the displacement between the electrode and the separator can be detected from the outside of the battery by an imaging method in which X-rays are irradiated.

It is also important for the battery to withstand external mechanical impact in order to prevent short circuit and ignition of the battery.

The length of the cycle life of a battery is a performance that is naturally required for a secondary battery.

The present disclosure has been made under the above circumstances.

An object of the present disclosure is to provide a separator for a non-aqueous secondary battery capable of detecting a displacement to an electrode with X-rays and improving impact resistance and cycle characteristics of the battery.

### Solution to Problem

The specific solutions to the problem include the following embodiments.
<1> A separator for a non-aqueous secondary battery, the separator including:
   a porous substrate; and
   a porous layer that is provided on one side or on both sides of the porous substrate, and that contains a resin and barium compound particles,
   in which an average primary particle diameter of the barium compound particles contained in the porous layer is from 0.30 µm to less than 0.50 µm, and
   in which a volume ratio of the barium compound particles to a volume of the porous layer excluding pores is more than 5% by volume and less than 70% by volume.
<2> The separator for a non-aqueous secondary battery according to <1>, in which the barium compound particles contain barium sulfate particles.
<3> The separator for a non-aqueous secondary battery according to <1> or <2>, in which the resin contains a polyvinylidene fluoride type resin.
<4> The separator for a non-aqueous secondary battery according to any one of <1> to <3>, in which the resin contains at least one selected from the group consisting of wholly aromatic polyamide, polyamideimide, poly-N-vinylacetamide, polyacrylamide, copolymerized polyether polyamide, polyimide, and polyetherimide.
<5> The separator for a non-aqueous secondary battery according to any one of <1> to <4>, in which a basis weight of the porous layer is 2.0 g/m² or more and 20.0 g/m² or less in total on both sides of the porous substrate.
<6> The separator for a non-aqueous secondary battery according to any one of <1> to <5>, in which a unit area weight of the barium compound particles contained in the porous layer is 0.3 g/m² or more and 19.0 g/m² or less in total on both sides of the porous substrate.
<7> A non-aqueous secondary battery that obtains electromotive force by doping and dedoping of lithium ions, the non-aqueous secondary battery including: a positive electrode; a negative electrode; and the separator for a non-aqueous secondary battery according to any one of <1> to <6>, the separator being disposed between the positive electrode and the negative electrode.

### Advantageous Effects of Invention

According to the present disclosure, there is provided a separator for a non-aqueous secondary battery capable of detecting a displacement to an electrode with X-rays and improving impact resistance and cycle characteristics of the battery.

### DESCRIPTION OF EMBODIMENTS

Hereinafter, embodiments of the present disclosure will be described. The description and the Examples thereof illustrate the embodiments, but do not limit the scope of the embodiments.

In the present disclosure, the numerical range denoted by using "to" represents the range inclusive of the numerical values written before and after "to" as the minimum and maximum values.

Regarding stepwise numerical ranges designated in the present disclosure, an upper or lower limit set forth in a certain numerical range may be replaced by an upper or lower limit of another stepwise numerical range described. Besides, an upper or lower limit set forth in a certain numerical range of the numerical ranges designated in the present disclosure may be replaced by a value indicated in Examples.

In the present disclosure, the term "process" includes not only an independent process, but also the process which is not clearly distinguished from other processes but achieves the purpose thereof.

In the present disclosure, when the amount of each component in a composition is referred to and when a plurality of substances corresponding to each component are present in the composition, the total amount of the plurality of components present in the composition is meant unless otherwise specified.

In the present disclosure, a plurality of kinds of particles corresponding to each component may be included. In a case where a plurality of kinds of particles corresponding to each component are present in the composition, the particle diameter of each component means a value of a mixture of the plurality of kinds of particles present in the composition unless otherwise specified.

In the present disclosure, MD (Machine Direction) refers to the longitudinal direction of a porous substrate and a separator manufactured in a long shape, and TD (Transverse Direction) refers to a direction orthogonal to MD in a surface direction of the porous substrate and the separator. In the present disclosure, TD is also referred to as a "width direction".

In the present disclosure, in a case where the lamination relationship between the respective layers constituting the separator is expressed by "upper" and "lower", a layer closer to the porous substrate is referred to as "lower", and a layer farther from the porous substrate is referred to as "upper".

In the present disclosure, a volume of the porous layer excluding pores is referred to as a "solid content volume".

### <Separator for Non-Aqueous Secondary Battery>

A separator for a non-aqueous secondary battery of the present disclosure (also simply referred to as "separator" in the present disclosure) includes a porous substrate and a porous layer provided on one side or on both sides of the porous substrate and containing a resin and barium compound particles. The porous layer is preferably an outermost layer of the separator provided on one side or both sides of the porous substrate.

The description of the porous layer in the present disclosure is a description of the porous layer on each side of the porous substrate. The separator of the present disclosure may have a porous layer containing a resin and barium compound particles on at least one side of a porous substrate. Examples of embodiments of the separator of the present disclosure include the following embodiments (1) to (3).
(1) A separator having a porous layer containing a resin and barium compound particles on both sides of a porous substrate, in which the porous layer on one side and the porous layer on the other side of the separator may be the same or different in component and/or composition.
(2) A separator having a porous layer containing a resin and barium compound particles on one side of a porous substrate and another layer on the other side of the porous substrate.
(3) A separator having a porous layer containing a resin and barium compound particles on one side of a porous substrate, and having no layer on the other side of the porous substrate (that is, the surface of the porous substrate is exposed).

The separator of the present disclosure has a porous layer containing a resin and barium compound particles. Since the barium compound has low X-ray permeability, a porous layer containing an appropriate amount of barium compound particles can be detected by an imaging method (for example, X-ray CT) in which X-rays are irradiated.

Examples of the barium compound particles contained in the porous layer include barium sulfate particles, barium carbonate particles, barium titanate particles, barium oxide particles, barium peroxide particles, and barium nitrate particles. The barium compound particles may be used singly or in combination of two or more kinds thereof.

The separator of the present disclosure has a porous layer containing a resin and barium compound particles, and the average primary particle diameter of the barium compound particles contained in the porous layer is from 0.30 µm to less than 0.50 µm.

When the average primary particle diameter of the barium compound particles contained in the porous layer is less than 0.30 µm, the battery is inferior in cycle characteristics. From the viewpoint of improving the cycle characteristics of the battery, the average primary particle diameter of the barium compound particles contained in the porous layer is 0.30 µm or more, preferably 0.32 µm or more, more preferably 0.35 µm or more, and still more preferably 0.38 µm or more.

When the average primary particle diameter of the barium compound particles contained in the porous layer is 0.50 µm or more, the battery is inferior in impact resistance. From the viewpoint of improving the impact resistance of the battery, the average primary particle diameter of the barium compound particles contained in the porous layer is less than 0.50 µm, preferably 0.48 µm or less, more preferably 0.45 µm or less, and still more preferably 0.42 µm or less.

From the viewpoint of achieving both the cycle characteristics and the impact resistance of the battery, the average primary particle diameter of the barium compound particles contained in the porous layer is from 0.30 µm to less than 0.50 µm, preferably 0.32 µm or more and 0.48 µm or less, more preferably 0.35 µm or more and 0.45 µm or less, and still more preferably 0.38 µm or more and 0.42 µm or less.

The average primary particle diameter of the barium compound particles contained in the porous layer is determined by measuring the major diameters of 100 barium compound particles randomly selected by observation with a scanning electron microscope (SEM), and averaging the major diameters of 100 barium compound particles. The sample subjected to the SEM observation is barium compound particles which are materials for forming the porous layer, or barium compound particles which are taken out from the porous layer of the separator. The method for taking out the barium compound particles from the porous layer of the separator is not limited. Examples of the method include a method in which the porous layer peeled off from the separator is immersed in an organic solvent in which the resin is dissolved to dissolve the resin in the organic solvent to take out the barium compound particles; and a method in which the porous layer peeled from the separator is heated to about 800°C to eliminate the resin and take out the barium compound particles.

The separator of the present disclosure has a porous layer containing a resin and barium compound particles, and the volume ratio of the barium compound particles to the solid content volume of the porous layer is more than 5% by volume and less than 70% by volume.

When the volume ratio of the barium compound particles to the solid content volume of the porous layer is 5% by volume or less, it is difficult to detect the separator inside the battery from the outside of the battery by X-rays, and the impact resistance of the battery is poor. From the viewpoint of enabling detection by X-rays and improving the impact resistance of the battery, the volume ratio of the barium compound particles to the solid content volume of the porous layer is more than 5% by volume, preferably 20% by volume or more, more preferably 30% by volume or more, and still more preferably 40% by volume or more.

When the volume ratio of the barium compound particles to the solid content volume of the porous layer is 70% by volume or more, the battery is inferior in cycle characteristics. From the viewpoint of improving the cycle characteristics of the battery, the volume ratio of the barium compound particles to the solid content volume of the porous layer is less than 70% by volume, preferably 68% by volume or less, more preferably 65% by volume or less, and still more preferably 63% by volume or less.

The volume ratio of the barium compound particles to the solid content volume of the porous layer is more than 5% by volume and less than 70% by volume, preferably 20% by volume or more and 68% by volume or less, more preferably 30% by volume or more and 65% by volume or less, and still more preferably 40% by volume or more and 63% by volume or less, from the viewpoint of achieving both the detection by X-rays and the impact resistance and the cycle characteristics of the battery.

The volume ratio V (% by volume) of the barium compound particles to the solid content volume of the porous layer is determined by the following formula. $V = \left\{\left(Xa/Da\right)/\left(Xa/Da+Xb/Db+Xc/Dc+…+Xn/Dn\right)\right\} \times 100$

Here, among the constituent materials of the porous layer, the barium compound particles are a, the other constituent materials are b, c,..., and n, the mass of each constituent material contained in the porous layer having a predetermined area is Xa, Xb, Xc,..., and Xn (g), and the true density of each constituent material is Da, Db, Dc,..., and Dn (g/cm³).

Xa and the like substituted into the above formula are the mass (g) of the constituent material used for forming the porous layer having a predetermined area, or the mass (g) of the constituent material taken out from the porous layer having a predetermined area.

Da and the like substituted into the above formula are the true density (g/cm³) of the constituent material used for forming the porous layer or the true density (g/cm³) of the constituent material taken out from the porous layer.

The unit area weight of the barium compound particles contained in the porous layer is preferably 0.3 g/m² or more in total on both sides of the porous substrate. In a case where the unit area weight of the barium compound particles is 0.3 g/m² or more, the separator inside the battery is easily detected by X-rays from the outside of the battery. From this viewpoint, the unit area weight of the barium compound particles contained in the porous layer is more preferably 0.5 g/m² or more, still more preferably 1.0 g/m² or more, and particularly preferably 1.5 g/m² or more.

The unit area weight of the barium compound particles contained in the porous layer is preferably 19.0 g/m² or less in total on both sides of the porous substrate. In a case where the unit area weight of the barium compound particles is 19.0 g/m² or less, it is easy to form the porous layer with high uniformity, and the cycle characteristics of the battery are improved. From this viewpoint, the unit area weight of the barium compound particles contained in the porous layer is more preferably 17.0 g/m² or less, still more preferably 15.0 g/m² or less, and particularly preferably 10.0 g/m² or less.

The unit area weight of the barium compound particles contained in the porous layer is preferably 0.3 g/m² or more and 19.0 g/m² or less, more preferably 0.5 g/m² or more and 17.0 g/m² or less, still more preferably 1.0 g/m² or more and 15.0 g/m² or less, and particularly preferably 1.5 g/m² or more and 10.0 g/m² or less in total on both sides of the porous substrate.

The unit area weight (g/m²) of the barium compound particles contained in the porous layer is a mass of the barium compound particles contained in the porous layer having a unit area with an area in a state where the porous layer is seen from a plan view as a unit.

As the barium compound particles contained in the porous layer, barium sulfate particles are preferable. The barium sulfate particles are less likely to decompose an electrolytic solution or an electrolyte and less likely to generate gas. Therefore, when the barium compound particles contained in the porous layer are barium sulfate particles, the battery has excellent cycle characteristics.

The average primary particle diameter of the barium sulfate particles contained in the porous layer is preferably from 0.30 µm to less than 0.50 µm, more preferably 0.32 µm or more and 0.48 µm or less, still more preferably 0.35 µm or more and 0.45 µm or less, and particularly preferably 0.38 µm or more and 0.42 µm or less, from the viewpoint of achieving both the cycle characteristics and the impact resistance of the battery.

The volume ratio of the barium sulfate particles to the solid content volume of the porous layer is preferably more than 5% by volume and less than 70% by volume, more preferably 20% by volume or more and 68% by volume or less, still more preferably 30% by volume or more and 65% by volume or less, and particularly preferably 40% by volume or more and 63% by volume or less, from the viewpoint of achieving both the detection by X-rays and the impact resistance and the cycle characteristics of the battery.

The weight of the barium sulfate particles contained in the porous layer is preferably 0.3 g/m² or more and 19.0 g/m² or less, more preferably 0.5 g/m² or more and 17.0 g/m² or less, still more preferably 1.0 g/m² or more and 15.0 g/m² or less, and particularly preferably 1.5 g/m² or more and 10.0 g/m² or less in total on both sides of the porous substrate.

Hereinafter, the details of the porous substrate and the porous layer included in the separator of the present disclosure will be described.

### [Porous Substrate]

In the present disclosure, the porous substrate refers to a substrate having pores or voids therein. Examples of such a substrate include a microporous film; a porous sheet made of a fibrous material, such as a non-woven fabric or paper; and a composite porous sheet in which one or more other porous layers are laminated on the microporous film or the porous sheet. In the present disclosure, a microporous film is preferable from the viewpoint of thinning and strength of a separator. The microporous film refers to a film having a large number of micropores therein, having a structure in which the micropores are connected to each other, and allowing gas or liquid to pass from one side to the other side.

As the material for the porous substrate, materials having electrical insulation are preferably used and any of organic materials and inorganic materials may be used.

It is preferred that the porous substrate contains a thermoplastic resin, in order to impart a shutdown function to the porous substrate. The shutdown function refers to a function of dissolving the constituent material to clog the pores of the porous substrate, thereby blocking ionic migration, and preventing thermal runaway of a battery, when the battery temperature is raised. As the thermoplastic resin, a thermoplastic resin having a melting point lower than 200°C is preferred. As the thermoplastic resin, for example, polyesters such as polyethylene terephthalate; polyolefins such as polyethylene and polypropylene; and the like may be mentioned, and among them, polyolefins are preferred.

As the porous substrate, a microporous film containing polyolefin (referred to as "polyolefin microporous film" in the present disclosure) is preferred. As the polyolefin microporous film, for example, a polyolefin microporous film which is applied to the conventional separator for a battery may be mentioned, and among them, it is preferred to select those having sufficient mechanical properties and ion permeability.

From the viewpoint of exhibiting the shutdown function, the polyolefin microporous film is preferably a microporous film containing polyethylene, and the content of polyethylene is preferably 95% by mass or more with respect to the mass of the entire polyolefin microporous film.

It is preferred that the polyolefin microporous film contains polypropylene, from the viewpoint of imparting heat resistance to the extent that the film is not easily broken when exposed to a high temperature.

It is preferred that the polyolefin microporous film contains polyethylene and polypropylene, from the viewpoint of imparting shutdown function and heat resistance that the film is not easily broken when exposed to a high temperature. Examples of the polyolefin microporous film containing polyethylene and polypropylene include a microporous film in which polyethylene and polypropylene are mixed in one layer. It is preferred that the microporous film contains 95 % by mass or more of polyethylene and 5 % by mass or less of polypropylene, from the viewpoint of compatibility of the shutdown function and heat resistance. In addition, from the viewpoint of compatibility of the shutdown function and heat resistance, a polyolefin microporous film having a lamination structure with two or more layers, in which at least one layer contains polyethylene and at least one layer contains polypropylene, is also preferred.

As the polyolefin contained in the polyolefin microporous film, a polyolefin having a weight-average molecular weight (Mw) of from 100,000 to 5,000,000 is preferred. In the case that the polyolefin has a Mw of 100,000 or more, sufficient mechanical properties may be provided to the microporous film. Meanwhile, in the case that the polyolefin has a Mw of 5,000,000 or less, the shutdown characteristic of the microporous film is favorable, and film molding of the microporous film is easy.

Examples of the method for manufacturing the polyolefin microporous film include, a method containing extruding a molten polyolefin resin from a T-die to form a sheet, crystallizing and elongating the sheet, and further subjecting the sheet to heat treatment, thereby obtaining a microporous film; and a method containing extruding a polyolefin resin melted with a plasticizer such as liquid paraffin from a T-die, cooling it to form a sheet, elongating the sheet, extracting the plasticizer, and performing heat treatment, thereby obtaining a microporous film.

Examples of the porous sheet made of a fibrous material include a porous sheet made of a fibrous material, such as a non-woven fabric or paper, such as polyesters such as polyethylene terephthalate; polyolefins such as polyethylene and polypropylene; heat-resistant resins such as wholly aromatic polyamide, polyamideimide, polyimide, polyether sulfone, polysulfone, polyether ketone, and polyetherimide; and cellulose.

In the present disclosure, a heat-resistant resin refers to a resin having a melting point of 200°C or higher, or a resin having no melting point and having a decomposition temperature of 200°C or higher. That is, the heat-resistant resin in the present disclosure is a resin that is not melted or decomposed in a temperature range of lower than 200°C.

Examples of the composite porous sheet include a sheet in which a functional layer is laminated on a porous sheet made of a microporous film or a fibrous material. Such a composite porous sheet is preferable from the viewpoint that a function can be further added thereto with a functional layer. Examples of the functional layer include a porous layer made of a heat-resistant resin and a porous layer made of a heat-resistant resin and an inorganic filler from the viewpoint of imparting heat resistance. Examples of the heat-resistant resin include one or more heat-resistant resins selected from the group consisting of wholly aromatic polyamide, polyamideimide, polyimide, polyether sulfone, polysulfone, polyether ketone, and polyetherimide. Examples of the inorganic filler include a metal oxide such as alumina, and a metal hydroxide such as magnesium hydroxide. Examples of a method of forming a composite include a method of applying a functional layer to a microporous film or a porous sheet, a method of bonding a microporous film or a porous sheet and a functional layer with an adhesive, and a method of thermally press-bonding a microporous film or a porous sheet with a functional layer.

The surface of the porous substrate may be subjected to various surface treatments within the range of not impairing the nature of the porous substrate, for the purpose of improving wettability with the coating liquid for forming the porous layer. As the surface treatment, corona treatment, plasma treatment, flame treatment, UV irradiation treatment, and the like may be mentioned.

### [Characteristics of Porous Substrate]

The thickness of the porous substrate is preferably 25 µm or less, more preferably 20 µm or less, and still more preferably 15 µm or less, from the viewpoint of increasing the energy density of the battery, and is preferably 3 µm or more, more preferably 5 µm or more, and still more preferably 8 µm or more, from the viewpoint of the production yield of the separator and the production yield of the battery.

The thickness (µm) of the porous substrate is obtained by measuring 20 points in a 10 cm square with a contact-type thickness meter (manufactured by Mitutoyo Corporation, LITEMATIC VL-50S) and averaging the measured values. A spherical probe (manufactured by Mitutoyo Corporation) with a sphere radius of 10 mm is used for the measuring terminal, and is adjusted so that a load of 0.19 N is applied during the measuring.

The Gurley value (JIS P8117:2009) of the porous substrate is preferably 20 sec/100 mL or more, more preferably 25 sec/100 mL or more, still more preferably 60 sec/100 mL or more, and particularly preferably 65 sec/100 mL or more, from the viewpoint of suppressing a short circuit of the battery.

The Gurley value (JIS P8117:2009) of the porous substrate is preferably 220 sec/100 mL or less, more preferably 200 sec/100 mL or less, still more preferably 160 sec/100 mL or less, and more particularly preferably 150 sec/100 mL or less, from the viewpoint of ion permeability and from the viewpoint of suppressing clogging of the porous structure at the boundary between the porous substrate and the porous layer when exposed to a high temperature.

The Gurley value (sec/100 mL) of the porous substrate is measured using a Gurley Type Densometer (G-B2C, manufactured by Toyo Seiki Seisaku-sho, Ltd.) in accordance with JIS P8117:2009.

The porous substrate preferably has a porosity of from 20% to 60% from the viewpoint of obtaining an appropriate film resistance and a shutdown function. The porosity ε (%) of the porous substrate is determined by the following formula. $ε = \left\{1-Ws/\left(ds⋅t\right)\right\} \times 100$

Here, Ws is the basis weight (g/m²) of the porous substrate, ds is the true density (g/cm³) of the porous substrate, and t is the thickness (µm) of the porous substrate. Basis weight refers to a mass per unit area.

The porous substrate preferably has an average pore size of from 15 nm to 100 nm from the viewpoint of ion permeability or suppression of a short circuit of a battery. The average pore size of the porous substrate is measured using a Perm Porometer (CFP-1500-A manufactured by PMI) in accordance with ASTM E1294-89.

### [Porous Layer]

The porous layer has a large number of micropores therein, has a structure in which the micropores are connected to each other, and is a layer through which gas or liquid can pass from one side to the other side.

The porous layer may be provided only on one side of the porous substrate, or may be provided on both sides of the porous substrate. When the porous layer is provided on both sides of the porous substrate, curling of the separator is less likely to occur, and the handleability during battery production is excellent. When the porous layer is provided only on one side of the porous substrate, the separator has better ion permeability. In addition, the thickness of the entire separator can be suppressed, and a battery having a higher energy density can be produced.

The porous layer contains at least a resin and barium compound particles. The porous layer may contain particles other than the barium compound particles. The other particles may be any of inorganic particles and organic particles.

The resin contained in the porous layer has, for example, a function of binding particles contained in the porous layer to each other, a function of bonding the porous layer to the porous substrate, a function of bonding the porous layer to the electrode, a function of improving heat resistance of the porous layer, and the like.

### -Polyvinylidene Fluoride Type Resin-

An example of the resin contained in the porous layer is a polyvinylidene fluoride type resin. In a case where the resin contained in the porous layer is a polyvinylidene fluoride type resin, the ion permeability of the porous layer is high, and the cycle characteristics of the battery are good.

Examples of the polyvinylidene fluoride type resin include a homopolymer of vinylidene fluoride (that is, polyvinylidene fluoride); a copolymer of vinylidene fluoride and a halogen-containing monomer such as hexafluoropropylene, tetrafluoroethylene, trifluoroethylene, chlorotrifluoroethylene, vinyl fluoride, or trichloroethylene; a copolymer of vinylidene fluoride and a monomer other than the halogen-containing monomer; a copolymer of vinylidene fluoride, the halogen-containing monomer, and a monomer other than the halogen-containing monomer; and a mixture thereof. The polyvinylidene fluoride type resins may be used singly or in combination of two or more kinds thereof.

As the polyvinylidene fluoride type resin, a copolymer of vinylidene fluoride (VDF) and hexafluoropropylene (HFP) (VDF-HFP copolymer) is preferable from the viewpoint of adhesiveness to an electrode. In the present disclosure, the VDF-HFP copolymer includes both a copolymer obtained by polymerizing only VDF and HFP and a copolymer obtained by polymerizing VDF, HFP, and another monomer. In the VDF-HFP copolymer, by increasing or decreasing the content of the HFP unit, the crystallinity, the heat resistance, the resistance to dissolution in an electrolytic solution, and the like of the copolymer can be controlled within an appropriate range.

The weight-average molecular weight (Mw) of the entire polyvinylidene fluoride type resin contained in the porous layer is preferably 300,000 or more, more preferably 500,000 or more, still more preferably 650,000 or more, and particularly preferably 750,000 or more, from the viewpoint that the pores of the porous layer are less likely to be clogged when heat is applied to the porous layer in the production of a battery.

The Mw of the entire polyvinylidene fluoride type resin contained in the porous layer is preferably less than 3,000,000, more preferably less than 2,500,000, still more preferably less than 2,000,000, and particularly preferably less than 1,000,000, from the viewpoint that the polyvinylidene fluoride type resin is moderately softened when heat is applied to the porous layer in the production of a battery and the porous layer and the electrode are favorably adhered to each other.

The Mw of the entire polyvinylidene fluoride type resin contained in the porous layer is a molecular weight in terms of polystyrene as measured by gel permeation chromatography (GPC). The polyvinylidene fluoride type resin extracted from the porous layer or the polyvinylidene fluoride type resin used for forming the porous layer is used as a sample.

In a case where the porous layer contains a polyvinylidene fluoride type resin, the content of the polyvinylidene fluoride type resin is preferably from 85% by mass to 100% by mass, more preferably from 90% by mass to 100% by mass, and still more preferably from 95% by mass to 100% by mass, with respect to the total amount of all the resins contained in the porous layer.

When the porous layer is provided on both sides of the porous substrate, the type or amount of the polyvinylidene fluoride type resin contained in one porous layer may be the same as or different from the type or amount of the polyvinylidene fluoride type resin contained in the other porous layer.

### -Heat-Resistant Resin-

An example of the resin contained in the porous layer is a heat-resistant resin. The type of the heat-resistant resin is not limited as long as the resin does not cause melting and decomposition in a temperature range of less than 200°C. When the resin contained in the porous layer is a heat-resistant resin, the heat resistance of the porous layer is high, and the impact resistance of the battery is improved.

Examples of the heat-resistant resin include at least one selected from the group consisting of wholly aromatic polyamide, polyamideimide, poly-N-vinylacetamide, polyacrylamide, copolymerized polyether polyamide, polyimide, and polyetherimide. These resins may be used singly or in combination of two or more kinds thereof. When the resin contained in the porous layer is at least one of these resins, the heat resistance of the porous layer is high, and the impact resistance of the battery is improved.

Among the heat-resistant resins, wholly aromatic polyamide is preferable from the viewpoint of durability. The wholly aromatic polyamide means a polyamide having a main chain composed only of a benzene ring and an amide bond. However, the wholly aromatic polyamide may be copolymerized with a small amount of an aliphatic monomer. The wholly aromatic polyamide is also called aramid.

The wholly aromatic polyamide may be meta-type or para-type. Among wholly aromatic polyamides, a meta type wholly aromatic polyamide is preferable from the viewpoints of easy formation of a porous layer and excellent oxidation-reduction resistance in an electrode reaction. Specifically, the wholly aromatic polyamide is preferably polymetaphenylene isophthalamide or polyparaphenylene terephthalamide, and more preferably polymetaphenylene isophthalamide.

In a case where the porous layer contains the heat-resistant resin, the content of the heat-resistant resin is preferably 85% by mass to 100% by mass, more preferably 90% by mass to 100% by mass, and still more preferably 95% by mass to 100% by mass, with respect to the total amount of all the resins contained in the porous layer.

In a case where the porous layer contains the wholly aromatic polyamide, the content of the wholly aromatic polyamide is preferably 85% by mass to 100% by mass, more preferably 90% by mass to 100% by mass, and still more preferably 95% by mass to 100% by mass, with respect to the total amount of all the resins contained in the porous layer.

In a case where the porous layer is provided on both sides of the porous substrate, the type or amount of the heat-resistant resin contained in one porous layer may be the same as or different from the type or amount of the heat-resistant resin contained in the other porous layer.

### -Other Resin-

The porous layer may contain a resin other than the polyvinylidene fluoride type resin and the heat-resistant resin. Examples of the other resin include an acrylic type resin, a fluorinated rubber, a styrene-butadiene copolymer, a homopolymer or a copolymer of a vinyl nitrile compound (acrylonitrile, methacrylonitrile, or the like), carboxymethyl cellulose, hydroxyalkyl cellulose, polyvinyl alcohol, polyvinyl butyral, polyvinyl pyrrolidone, polyether (polyethylene oxide, polypropylene oxide, or the like), polysulfone, polyketone, polyether ketone, polyether sulfone, and a mixture thereof.

The content of the other resin contained in the porous layer is preferably from 0% by mass to 15% by mass, more preferably from 0% by mass to 10% by mass, and still more preferably from 0% by mass to 5% by mass, with respect to the total amount of the resin contained in the porous layer.

### -Barium Compound Particles-

Examples of the barium compound particles contained in the porous layer include barium sulfate particles, barium carbonate particles, barium titanate particles, barium oxide particles, barium peroxide particles, and barium nitrate particles. The barium compound particles may be used singly or in combination of two or more kinds thereof.

The barium compound particles contained in the porous layer may be particles surface-modified with a silane coupling agent or the like.

The particle shape of the barium compound particles contained in the porous layer is not limited, and may be any of a spherical shape, an elliptical shape, a plate shape, a needle shape, and an amorphous shape. The barium compound particles contained in the porous layer are preferably plate-shaped particles or non-aggregated primary particles from the viewpoint of suppressing a short circuit of a battery.

The content of the barium compound particles contained in the porous layer is preferably from 85% by mass to 100% by mass, more preferably from 90% by mass to 100% by mass, and still more preferably from 95% by mass to 100% by mass, with respect to the total amount of the inorganic particles contained in the porous layer.

In a case where the porous layer contains barium sulfate particles, the content of the barium sulfate particles is preferably from 85% by mass to 100% by mass, more preferably from 90% by mass to 100% by mass, and still more preferably from 95% by mass to 100% by mass, with respect to the total amount of the inorganic particles contained in the porous layer.

In a case where the porous layer is provided on both sides of the porous substrate, the type or amount of the barium compound particles contained in one porous layer may be the same as or different from the type or amount of the barium compound particles contained in the other porous layer.

### -Other Inorganic Particles Other than Barium Compound Particles-

The porous layer may contain inorganic particles other than the barium compound particles. However, the volume ratio of the other inorganic particles to the solid content volume of the porous layer is preferably 5% by volume or less, more preferably 3% by volume or less, and still more preferably 1% by volume or less, and it is particularly preferable that the other inorganic particles are not substantially contained.

Examples of the other inorganic particles include: particles of a metal hydroxide such as aluminum hydroxide, magnesium hydroxide, calcium hydroxide, chromium hydroxide, zirconium hydroxide, cerium hydroxide, nickel hydroxide, or boron hydroxide; particles of a metal oxide such as silica, alumina, titania, zirconia, or magnesium oxide; particles of a carbonate such as calcium carbonate or magnesium carbonate; particles of a sulfate such as calcium sulfate; and a clay mineral such as calcium silicate or talc. As the other inorganic particles, particles of a metal hydroxide or particles of a metal oxide are preferable from the viewpoint of stability to an electrolytic solution and electrochemical stability. The other inorganic particles may be surface-modified with a silane coupling agent or the like. The other inorganic particles may be used singly or in combination of two or more kinds thereof.

The particle shape of each of the other inorganic particles is not limited, and may be any of a spherical shape, an elliptical shape, a plate shape, a needle shape, and an amorphous shape. The other inorganic particles contained in the porous layer are preferably plate-shaped particles or non-aggregated primary particles from the viewpoint of suppressing a short circuit of a battery.

The average primary particle diameter of the other inorganic particles is preferably 0.01 µm or more and 5.0 µm or less and more preferably 0.1 µm or more and 1.0 µm or less.

### -Organic Particles-

The porous layer may contain organic particles. Examples of the organic particles include particles of a crosslinked polymer such as crosslinked poly (meth)acrylic acid, crosslinked poly (meth)acrylate, crosslinked polysilicone, crosslinked polystyrene, crosslinked polydivinylbenzene, a styrene-divinylbenzene copolymer crosslinked product, a melamine resin, a phenol resin, or a benzoguanamine-formaldehyde condensate; and particles of a heat-resistant polymer such as polysulfone, polyacrylonitrile, aramid, or polyacetal. The expression "(meth)acryl" means that the term may be either "acryl" or "methacryl".

The resin constituting the organic particles may be a mixture, a modified product, a derivative, a copolymer (a random copolymer, an alternating copolymer, a block copolymer, a graft copolymer), or a crosslinked product of the above-described exemplary materials.

The organic particles may be used singly or in combination of two or more kinds thereof.

### -Other Components-

The porous layer may contain an additive, for example, a dispersant such as a surfactant, a wetting agent, an antifoaming agent, or a pH adjuster. The dispersant is added to a coating liquid for forming the porous layer for the purpose of improving dispersibility, coatability, or storage stability. The wetting agent, the antifoaming agent, or the pH adjuster is added to a coating liquid for forming the porous layer for the purpose of, for example, improving compatibility with the porous substrate, suppressing mixing of air into the coating liquid, or adjusting the pH.

### [Characteristics of Porous Layer]

The thickness of the porous layer is preferably 0.5 µm or more on one side, more preferably 1.0 µm or more on one side, and still more preferably 1.5 µm or more on one side from the viewpoint of the ease of detection of the separator by X-rays and the impact resistance of the battery, and is preferably 10.0 µm or less on one side, more preferably 8.0 µm or less on one side, and still more preferably 6.0 µm or less on one side from the viewpoint of the ion permeability and the energy density of the battery.

When the porous layer is provided on both sides of the porous substrate, the thickness of the porous layer is preferably 1.0 µm or more, more preferably 2.0 µm or more, and still more preferably 3.0 µm or more, and is preferably 20.0 µm or less, more preferably 16.0 µm or less, and still more preferably 12.0 µm or less, in terms of the total thickness of the porous layer on both sides of the porous substrate.

When the porous layer is provided on both sides of the porous substrate, the difference (µm) between the thickness of one porous layer and the thickness of the other porous layer is preferably as small as possible, and is preferably 20% or less of the total thickness (µm) of both sides.

The basis weight (mass per unit area) of the porous layer is preferably 2.0 g/m² or more, more preferably 2.5 g/m² or more, still more preferably 3.0 g/m² or more, and yet still more preferably 3.4 g/m² or more, in terms of the total of both sides of the porous substrate from the viewpoint of the ease of detection of the separator by X-rays and the impact resistance of the battery, in both cases where the porous layer is provided on one side or both sides of the porous substrate.

The basis weight (mass per unit area) of the porous layer is preferably 20.0 g/m² or less, more preferably 18.0 g/m² or less, still more preferably 15.0 g/m² or less, and yet still more preferably 10.0 g/m² or less, in terms of the total of both sides of the porous substrate from the viewpoint of the ion permeability, the energy density of the battery, and the cycle characteristics, in both cases where the porous layer is provided on one side or both sides of the porous substrate.

When the porous layer is provided on both sides of the porous substrate, the difference (g/m²) between the basis weight of one porous layer and the basis weight of the other porous layer is preferably as small as possible from the viewpoint of suppressing curling of the separator or from the viewpoint of improving the cycle characteristics of the battery, and is preferably 20% or less of the total amount (g/m²) on both sides of the porous substrate.

The porosity of the porous layer is preferably 30% or more, more preferably 35% or more, and still more preferably 40% or more, from the viewpoint of ion permeability, and is preferably 70% or less, more preferably 65% or less, and still more preferably 60% or less, from the viewpoint of mechanical strength of the porous layer. The porosity ε (%) of the porous layer is determined by the following formula. [Math. 1] $ε = \left(1-\frac{{\sum }_{i = 1}^{n} \frac{W i}{d i}}{t}\right) \times 100$

Here, regarding the constituent material 1, the constituent material 2, the constituent material 3,..., and the constituent material n of the porous layer, the mass per unit area of each constituent material is W₁, W₂, W₃,..., and Wₙ (g/cm²), the true density of each constituent material is d₁, d₂, d₃,..., and dₙ (g/cm³), and the thickness of the porous layer is t (cm).

The average pore size of the porous layer is preferably from 10 nm to 200 nm. In a case where the average pore size is 10 nm or more, when the porous layer is impregnated with an electrolytic solution, the pores are hardly clogged even if a resin contained in the porous layer swells. In a case where the average pore size is 200 nm or less, uniformity in ion transfer in the porous layer is high, and a battery has excellent cycle characteristics and load characteristics.

The average pore size (nm) of the porous layer is calculated by the following formula, assuming that all pores are cylindrical. $d = 4 V / S$

In the formula, d represents an average pore size (diameter) of the porous layer, V represents a pore volume per square meter of the porous layer, and S represents a pore surface area per square meter of the porous layer.

The pore volume V per square meter of the porous layer is calculated from the porosity of the porous layer.

The pore surface area S per square meter of the porous layer is determined by the following method.

First, a specific surface area (m²/g) of the porous substrate and a specific surface area (m²/g) of the separator are calculated from a nitrogen gas adsorption amount by applying a BET formula to a nitrogen gas adsorption method. These specific surface areas (m²/g) are multiplied by basis weights (g/m²) of the porous substrate and the separator, respectively, to calculate a pore surface area per square meter. Then, the pore surface area per square meter of the porous substrate is subtracted from the pore surface area per square meter of the separator to calculate the pore surface area S per square meter of the porous layer. Basis weight refers to a mass per unit area.

### [Characteristics of Separator]

The thickness of the separator is preferably 8 µm or more, more preferably 10 µm or more, and still more preferably 12 µm or more, from the viewpoint of the mechanical strength of the separator, and is preferably 25 µm or less, more preferably 22 µm or less, and still more preferably 20 µm or less, from the viewpoint of the energy density of the battery.

The Gurley value (JIS P8117:2009) of the separator is preferably 50 sec/100 mL or more, more preferably 60 sec/100 mL or more, still more preferably 70 sec/100 mL or more, and particularly preferably 80 sec/100 mL or more, from the viewpoint of suppressing a short circuit of the battery.

The Gurley value (JIS P8117:2009) of the separator is preferably 200 sec/100 mL or less, more preferably 180 sec/100 mL or less, still more preferably 150 sec/100 mL or less, and particularly preferably 130 sec/100 mL or less, from the viewpoint of ion permeability.

The separator preferably has a film resistance of from 1 Ω·cm² to 10 Ω·cm² from the viewpoint of load characteristics of a battery. The film resistance of the separator refers to a resistance value in a state where the separator is impregnated with an electrolytic solution, and is measured by an AC method at a temperature of 20°C using 1 mol/L LiBF₄-propylene carbonate : ethylene carbonate (mass ratio 1 : 1) as the electrolytic solution. The separator with a lower film resistance value has better ion permeability.

### [Method of Manufacturing Separator]

The separator of the present disclosure can be produced, for example, by forming the porous layer on the porous substrate by a wet coating method or a dry coating method. In the present disclosure, the wet coating method is a method of solidifying a coating layer in a coagulation liquid, and the dry coating method is a method of drying a coating layer to solidify the coating layer. Hereinafter, embodiment examples of the wet coating method will be described.

The wet coating method is a method of applying a coating liquid containing a resin and a filler onto a porous substrate, immersing the resulting product in a coagulation liquid to solidify the coating layer, pulling the resulting product out of the coagulation liquid, washing the resulting product with water, and drying the resulting product.

The coating liquid for forming the porous layer is prepared by dissolving or dispersing a resin and barium compound particles in a solvent. In the coating liquid, a component other than the resin and the barium compound particles is dissolved or dispersed, if necessary.

A solvent used for preparing the coating liquid includes a solvent that dissolves the resin (hereinafter, also referred to as a "good solvent"). Examples of the good solvent include a polar amide solvent such as N-methylpyrrolidone, dimethylacetamide, or dimethylformamide.

The solvent used for preparing the coating liquid may contain a phase separation agent that induces phase separation from the viewpoint of forming a porous layer having a favorable porous structure. Therefore, the solvent used for preparing the coating liquid may be a mixed solvent of a good solvent and a phase separation agent. The phase separation agent is preferably mixed with a good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.

In a case where the solvent used for the preparation of the coating liquid is a mixed solvent of the good solvent and the phase separation agent, from the viewpoint of forming a favorable porous structure, a mixed solvent containing 60% by mass or more of the good solvent and from 5% by mass to 40% by mass of the phase separation agent is preferable.

The resin concentration of the coating liquid is preferably from 1% by mass to 20% by mass from the viewpoint of forming a favorable porous structure. The barium compound particle concentration of the coating liquid is preferably from 0.5% by mass to 50% by mass from the viewpoint of forming a favorable porous structure.

The coating liquid may contain a dispersant such as a surfactant, a wetting agent, an antifoaming agent, a pH adjuster, and the like. These additives may remain in the porous layer as long as they are electrochemically stable and do not inhibit the reaction in the battery within the range of use of the non-aqueous secondary battery.

Examples of a means of applying the coating liquid to the porous substrate include a Meyer bar, a die coater, a reverse roll coater, a roll coater, and a gravure coater. When the porous layer is formed on both sides of the porous substrate, it is preferable to simultaneously apply the coating liquid to both sides of the porous substrate from the viewpoint of productivity.

The coating layer is solidified by immersing the porous substrate on which the coating layer is formed in a coagulation liquid, and solidifying the resin while phase separation is induced in the coating layer. Thus, the laminated body including the porous substrate and the porous layer is obtained.

The coagulation liquid generally contains the good solvent and the phase separation agent used for preparing the coating liquid, and water. A mixing ratio between the good solvent and the phase separation agent is preferably matched with the mixing ratio of the mixed solvent used for preparing the coating liquid in terms of production. The content of water in the coagulation liquid is preferably from 40% by mass to 90% by mass from the viewpoint of formation of a porous structure and productivity. The temperature of the coagulation liquid is, for example, from 20°C to 50°C.

After the coating layer is solidified in the coagulation liquid, the laminated body is pulled out of the coagulation liquid and washed with water. The coagulation liquid is removed from the laminated body by washing with water. Further, water is removed from the laminated body by drying. Washing with water is performed, for example, by transporting the laminated body in a water washing bath. Drying is performed, for example, by transporting the laminated body in a high-temperature environment, blowing air to the laminated body, or bringing the laminated body into contact with a heat roll. The drying temperature is preferably from 40°C to 80°C.

The separator of the present disclosure can also be produced by a dry coating method. The dry coating method is a method of applying a coating liquid to a porous substrate, drying the coating layer to remove a solvent by evaporation, and thereby forming a porous layer on the porous substrate.

The separator of the present disclosure can also be produced by a method of preparing a porous layer as an independent sheet, stacking the porous layer on a porous substrate, and forming a composite by thermal press bonding or an adhesive. Examples of the method of preparing a porous layer as an independent sheet include a method of forming a porous layer on a release sheet by applying the above-described wet coating method or dry coating method.

### <Non-Aqueous Secondary Battery>

A non-aqueous secondary battery of the present disclosure is a non-aqueous secondary battery that obtains electromotive force by doping and dedoping of lithium ions, and includes a positive electrode, a negative electrode, and a separator for a non-aqueous secondary battery of the present disclosure. The doping means occlusion, support, adsorption, or insertion, and means a phenomenon that lithium ions enter an active material of an electrode such as a positive electrode.

The non-aqueous secondary battery of the present disclosure has a structure in which, for example, a battery element in which a negative electrode and a positive electrode face each other with a separator interposed therebetween is enclosed in an exterior material together with an electrolytic solution. The non-aqueous secondary battery of the present disclosure is suitable for a non-aqueous electrolyte secondary battery, particularly for a lithium ion secondary battery.

Hereinafter, aspect examples of the positive electrode, negative electrode, electrolytic solution, and exterior material included in the non-aqueous secondary battery according to the present disclosure will be described.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithium-containing transition metal oxide, and specific examples thereof include LiCoO₂, LiNiO₂, LiMn_{1/2}Ni_{1/2}O₂, LiCo_{1/3}Mn_{1/3}Ni_{1/3}O₂, LiMn₂O₄, LiFePO₄, LiCo_{1/2}Ni_{1/2}O₂, and LiAl_{1/4}Ni_{3/4}O₂. Examples of the binder resin include a polyvinylidene fluoride type resin and a styrene-butadiene copolymer. Examples of the conductive auxiliary agent include carbon materials such as acetylene black, Ketjen black, and graphite powder. Examples of the current collector include an aluminum foil, a titanium foil, and a stainless steel foil, each having a thickness of from 5 µm to 20 µm.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium ions. Specific examples thereof include carbon materials; alloys of lithium in combination with silicon, tin, aluminum or the like; and wood's alloy. Examples of the binder resin include a polyvinylidene fluoride type resin and a styrene-butadiene copolymer. Examples of the conductive auxiliary agent include carbon materials such as acetylene black, Ketjen black, graphite powder, and ultrafine carbon fibers. Examples of the current collector include a copper foil, a nickel foil, and a stainless steel foil, each having a thickness of from 5 µm to 20 µm. Instead of using the negative electrode described above, a metal lithium foil may be used as the negative electrode.

The electrolytic solution is a solution in which a lithium salt is dissolved in a non-aqueous solvent. Examples of the lithium salt include LiPF₆, LiBF₄, and LiClO₄. Examples of the non-aqueous solvent include cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as γ-butyrolactone and γ-valerolactone. These non-aqueous solvent may be used singly, or in combination. As the electrolytic solution, a solution is preferred, which is obtained by mixing a cyclic carbonate and a chain carbonate at a mass ratio (cyclic carbonate : chain carbonate) of from 20 : 80 to 40 : 60, and dissolving a lithium salt therein to give a concentration of from 0.5 mol/L to 1.5 mol/L.

Examples of the exterior material include an aluminum laminated film pack and a metal can. The shape of the battery may be a square shape, a cylindrical shape, a coin shape, and the like, and the separator of the present disclosure is suitable for any one of these shapes.

The non-aqueous secondary battery of the present disclosure can be produced by producing a laminated body in which the separator of the present disclosure is disposed between a positive electrode and a negative electrode, and then using this laminated body, for example, by any one of the following (1) to (3). In the following description, performing the heat press treatment by impregnating the separator with the electrolytic solution is referred to as "wet heat press", and performing the heat press treatment without impregnating the separator with the electrolytic solution is referred to as "dry heat press".
(1) After the electrode and the separator are bonded to the laminated body by dry heat pressing, the laminated body is accommodated in an exterior material (for example, an aluminum laminated film pack, the same applies hereinafter), an electrolytic solution is injected therein, the inside of the exterior material is brought into a vacuum state, and then the laminated body is further subjected to wet heat pressing from above the exterior material to bond the electrode and the separator and seal the exterior material.
(2) The laminated body is accommodated in an exterior material, an electrolytic solution is injected therein, and the inside of the exterior material is brought into a vacuum state, and then the laminated body is subjected to wet heat pressing from above the exterior material to bond the electrode and the separator and seal the exterior material.
(3) After the electrode and the separator are bonded to the laminated body by dry heat pressing, the laminated body is accommodated in an exterior material, an electrolytic solution is injected therein, the inside of the exterior material is brought into a vacuum state, and then the exterior material is sealed.

As conditions of the wet heat press in the above-described production method, press temperature is preferably from 70°C to 110°C, and press pressure is preferably from 0.5 MPa to 2 MPa. As conditions of the dry heat press in the above-described production method, press temperature is preferably from 20°C to 100°C, and press pressure is preferably from 0.5 MPa to 9 MPa. Press time is preferably adjusted according to press temperature and press pressure, and is adjusted, for example, in a range of from 0.5 minutes to 60 minutes.

In the production of the laminated body in which the separator is disposed between the positive electrode and the negative electrode, the method of disposing the separator between the positive electrode and the negative electrode may be a method of laminating at least one layer each of the positive electrode, the separator, and the negative electrode in this order (so-called stack method), or may be a method of stacking the positive electrode, the separator, the negative electrode, and the separator in this order and winding them in the length direction.

### EXAMPLES

Hereinafter, the separator and the non-aqueous secondary battery of the present disclosure will be described more specifically with reference to Examples. Materials, used amounts, ratios, treatment procedures, and the like illustrated in the following Examples can be changed, if appropriate without departing from the spirit of the present disclosure. Therefore, the range of the separator and the non-aqueous secondary battery of the present disclosure should not be construed as being limited by the specific examples described below.

In the following description, synthesis, treatment, production, and the like were performed at room temperature (25°C ± 3°C) unless otherwise specified.

### <Measurement Method and Evaluation Method>

The measurement methods and evaluation methods applied in Examples and Comparative Examples are as follows.

### [Thickness of Porous Substrate]

The thickness (µm) of the porous substrate was obtained by measuring 20 points in a 10 cm square with a contact-type thickness meter (manufactured by Mitutoyo Corporation, LITEMATIC VL-50S) and averaging the measured values. A spherical probe (manufactured by Mitutoyo Corporation) with a sphere radius of 10 mm was used for the measuring terminal, and was adjusted so that a load of 0.19 N was applied during the measuring.

### [Porosity of Porous Substrate]

The porosity ε (%) of the porous substrate was determined by the following formula. $ε = \left\{1-Ws/\left(ds⋅t\right)\right\} \times 100$

Here, Ws is the basis weight (g/m²) of the porous substrate, ds is the true density (g/cm³) of the porous substrate, and t is the thickness (µm) of the porous substrate. Basis weight refers to a mass per unit area.

### [Gurley Value of Porous Substrate]

The Gurley value (sec/100 mL) of the porous substrate was measured using a Gurley Type Densometer (G-B2C, manufactured by Toyo Seiki Seisaku-sho, Ltd.) in accordance with JIS P8117:2009.

### [Average Primary Particle Diameter of Inorganic Particles]

A sample of the inorganic particles used for forming the porous layer was subjected to SEM observation to determine the average primary particle diameter. More details are as follows.

The average primary particle diameter of the barium compound particles contained in the porous layer is determined by measuring the major diameters of 100 barium compound particles randomly selected by observation with a scanning electron microscope (SEM), and averaging the major diameters of 100 barium compound particles. The sample subjected to the SEM observation is barium compound particles which are materials for forming the porous layer, or barium compound particles which are taken out from the porous layer of the separator. The method for taking out the barium compound particles from the porous layer of the separator is not limited.

### [Volume Ratio of Inorganic Particles]

The volume ratio V (% by volume) of the inorganic particles to the solid content volume of the porous layer was determined by the following formula. $V = \left\{\left(Xa/Da\right)/\left(Xa/Da+Xb/Db+Xc/Dc+…+Xn/Dn\right)\right\} \times 100$

Here, among the constituent materials of the porous layer, the inorganic particles are a, the other constituent materials are b, c,..., and n, the mass of each constituent material contained in the porous layer having a predetermined area is Xa, Xb, Xc,..., and Xn (g), and the true density of each constituent material is Da, Db, Dc,..., and Dn (g/cm³). Xa and the like to be substituted into the above formula are the mass (g) of the constituent material used for forming the porous layer having a predetermined area. Da and the like to be substituted into the above formula are the true density (g/cm³) of the constituent material used for forming the porous layer.

### [Unit Area Weight of Barium Compound Particles]

The unit area weight (g/m²) of the barium compound particles contained in the porous layer is a mass of the barium compound particles contained in the porous layer having a unit area with an area in a state where the porous layer is seen from a plan view as a unit.

### [Weight-average Molecular Weight of Polyvinylidene Fluoride type Resin]

The weight-average molecular weight of the entire polyvinylidene fluoride type resin contained in the porous layer is a molecular weight in terms of polystyrene as measured by gel permeation chromatography (GPC). The polyvinylidene fluoride type resin extracted from the porous layer or the polyvinylidene fluoride type resin used for forming the porous layer is used as a sample.

### [X-ray CT]

### -Preparation of Negative Electrode-

300 parts by mass of artificial graphite as a negative electrode active material, 7.5 parts by mass of a water-soluble dispersion containing 40% by mass of a modified product of a styrene-butadiene copolymer as a binder resin, 3 parts by mass of carboxymethyl cellulose as a thickener, and an appropriate amount of water were stirred and mixed with a double-armed mixer to prepare a negative electrode slurry. The negative electrode slurry was applied to both sides of a copper foil having a thickness of 10 µm, dried, and then pressed to obtain a negative electrode having a negative electrode active material layer on both sides.

### -Preparation of Positive Electrode-

89.5 parts by mass of lithium cobaltate powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed with a double-armed mixer to prepare a positive electrode slurry. The positive electrode slurry was applied to both sides of an aluminum foil having a thickness of 20 µm, dried and then pressed to obtain a positive electrode having a positive electrode active material layer on both sides.

### -Preparation of Observation Sample-

The positive electrode was cut out into a rectangle of 30 mm × 50 mm, the negative electrode was cut out into a rectangle of 30 mm × 50 mm, and the separator was cut out into a rectangle of 34 mm × 54 mm. The positive electrode, the separator, the negative electrode, and the separator were laminated in this order to form a laminated body having three layers of each of the positive electrode and the negative electrode and five layers of the separator. The laminated body was inserted into an aluminum laminated film pack, and the inside of the pack was brought into a vacuum state and sealed using a vacuum sealer to obtain an observation sample.

### -X-ray CT-

For X-ray CT, a microfocus X-ray CT system (inspeXio SMX-225CT FPD HR) manufactured by Shimadzu Corporation was used. At an X-ray tube voltage of 220 kV, an X-ray tube current of 100 µA, and an exposure time of 1 sec, an image of a cross section of the laminated body in the thickness direction was captured at an end portion of the observation sample.

The gray value (GV) of the separator was measured from the X-ray CT image, and GV was classified as follows. The larger the value of GV, the more desirable it was.
Level 5: GV of 37301 or more
Level 4: GV of 36501 or more and 37300 or less
Level 3: GV of 35701 or more and 36500 or less
Level 2: GV of 35251 or more and 35700 or less
Level 1: GV of 35250 or less

### [Impact Resistance (Compression Breaking Strength) of Battery]

Ten test secondary batteries described below were prepared. The test secondary batteries were charged at a constant current and a constant voltage in an environment at a temperature of 20°C. Specifically, the battery was charged to 4.2 V at 0.1 C and held at 4.2 V for 3 hours. Then, the test secondary battery was placed on a horizontal platform with the positive electrode side up and fixed thereto with an adhesive tape. A spherical terminal having a diameter of 5 mm was placed at the center on the test secondary battery, and was gradually lowered at a speed of 100 mm/min to apply a load to the test secondary battery. The value (unit: N) of the load at the moment when the voltage of the test secondary battery decreased and reached 3.5 V was obtained, and the average of the ten batteries was calculated.

### [Cycle Characteristics (Capacity Retention Rate) of Battery]

Ten test secondary batteries described below were prepared. The test secondary batteries were charged and discharged for 500 cycles in an environment at a temperature of 40°C. The battery was charged at a constant-current and constant-voltage charging of 1 C and 4.2 V, and discharged at a constant-current discharging of 1 C and 2.75 V cut-off. The discharge capacity at the 500th cycle was divided by the initial discharge capacity to calculate the average of 10 batteries, and the obtained value (%) was defined as the capacity retention rate.

### <Production of Separator and Battery>

### [Example 1]

### -Preparation of Separator-

A polyvinylidene fluoride type resin was dissolved in dimethylacetamide (DMAc) so as to have a resin concentration of 5.0% by mass, and barium sulfate particles were further stirred and dispersed to obtain a coating liquid (1). An appropriate amount of the coating liquid (1) was placed on a Meyer bar, and both sides of a polyethylene microporous film were coated with the coating liquid (1). At this time, coating was performed so that the coating amounts on the front and back surfaces of the polyethylene microporous film were equal. The resulting film was immersed in a coagulation liquid (DMAc : water = 50 : 50 [mass ratio], liquid temperature: 40°C) to solidify the coating layers, subsequently washed in a water washing tank at a water temperature of 40°C, and dried. In this way, a separator in which a porous layer was formed on both sides of a polyethylene microporous film was obtained.

### -Preparation of Negative Electrode-

300 parts by mass of artificial graphite as a negative electrode active material, 7.5 parts by mass of a water-soluble dispersion containing 40% by mass of a modified product of a styrene-butadiene copolymer as a binder resin, 3 parts by mass of carboxymethyl cellulose as a thickener, and an appropriate amount of water were stirred and mixed with a double-armed mixer to prepare a negative electrode slurry. The negative electrode slurry was applied to one side of a copper foil having a thickness of 10 µm, dried, and then pressed to obtain a negative electrode having a negative electrode active material layer on one side.

### -Preparation of Positive Electrode-

89.5 parts by mass of lithium cobaltate powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed with a double-armed mixer to prepare a positive electrode slurry. The positive electrode slurry was applied to one side of an aluminum foil having a thickness of 20 µm, dried and then pressed to obtain a positive electrode having a positive electrode active material layer on one side.

### -Production of Battery-

The positive electrode was cut out into a rectangle of 30 mm × 50 mm, the negative electrode was cut out into a rectangle of 30 mm × 50 mm, and a lead tab was welded to each of them. The separator was cut out into a rectangle of 34 mm × 54 mm. The positive electrode, the separator, and the negative electrode were laminated in this order. The laminated body was inserted into an aluminum laminated film pack, an electrolytic solution (1 mol/L LiPF₆-ethylene carbonate : ethylmethyl carbonate [mass ratio of 3:7]) was injected into the pack, and the electrolytic solution was impregnated into the laminated body. Next, the inside of the pack was put into a vacuum state using a vacuum sealer and temporarily sealed, and hot pressing was performed using a hot press machine in the lamination direction of the laminated body together with the pack, thereby bonding the electrode and the separator. The conditions of the hot pressing were a temperature of 90°C, a load of 1 MPa, and a press time of 2 minutes. Subsequently, the inside of the pack was brought into a vacuum state and sealed using a vacuum sealer to obtain a test secondary battery.

### [Examples 2 to 13 and Comparative Examples 1 to 12]

Each separator was produced in the same manner as in Example 1, except that the type and amount of the material were changed to the specifications shown in Table 1. Then, a test secondary battery was produced in the same manner as in Example 1 using each separator.

The material, composition, physical properties, and evaluation results of each separator of Examples 1 to 13 and Comparative Examples 1 to 12 are shown in Table 1.

"PVDF" in Table 1 is a binary copolymer of vinylidene fluoride and hexafluoropropylene, and is a polyvinylidene fluoride type resin having a weight-average molecular weight of 800,000.

"Meta-aramid" in Table 1 is polymetaphenylene isophthalamide.

**[Table 1]**

| | Porous substrate | | | Porous layer | | | | | | Performance evaluation | | |
|---|---|---|---|---|---|---|---|---|---|---|---|---|
| | Thickness | Porosity | Gurley value | Resin | Inorganic particles | | | Basis weight (Total on both sides) | Weight of barium compound particles (Total on both sides) | X-ray CT | Impact resistance | Cycle characteristics |
| | | | | Type | Type | Particle diameter | Volume ratio | | | | | |
| | µm | % | sec/100 mL | - | - | µm | % by volume | g/m² | g/m² | - | N | % |
| Example 1 | 7.4 | 34 | 158 | PVDF | BaSO₄ | 0.30 | 58 | 5.0 | 3.9 | 4 | 554 | 82 |
| Example 2 | 7.4 | 34 | 158 | PVDF | BaSO₄ | 0.48 | 58 | 5.0 | 3.9 | 4 | 532 | 86 |
| Example 3 | 7.4 | 34 | 158 | PVDF | BaSO₄ | 0.30 | 6 | 3.2 | 0.4 | 2 | 485 | 94 |
| Example 4 | 7.4 | 34 | 158 | PVDF | BaSO₄ | 0.30 | 69 | 8.6 | 7.3 | 5 | 573 | 73 |
| Example 5 | 5.7 | 35 | 141 | PVDF | BaSO₄ | 0.30 | 58 | 5.6 | 4.4 | 4 | 475 | 85 |
| Example 6 | 7.4 | 34 | 158 | Meta-type aramid | BaSO₄ | 0.30 | 63 | 6.0 | 5.1 | 4 | 582 | 55 |
| Example 7 | 7.4 | 34 | 158 | Meta-type aramid | BaSO₄ | 0.48 | 63 | 6.0 | 5.1 | 4 | 553 | 63 |
| Example 8 | 7.4 | 34 | 158 | Meta-type aramid | BaSO₄ | 0.30 | 6 | 2.6 | 0.4 | 2 | 492 | 59 |
| Example 9 | 7.4 | 34 | 158 | Meta-type aramid | BaSO₄ | 0.30 | 69 | 7.9 | 7.0 | 5 | 612 | 57 |
| Example 10 | 7.4 | 34 | 158 | Meta-type aramid | BaSO₄ | 0.40 | 42 | 14.2 | 9.2 | 5 | 537 | 53 |
| Example 11 | 7.4 | 34 | 158 | Meta-type aramid | BaSO₄ | 0.40 | 31 | 3.5 | 1.9 | 3 | 529 | 66 |
| Example 12 | 5.7 | 35 | 141 | Meta-type aramid | BaSO₄ | 0.30 | 63 | 2.0 | 1.7 | 3 | 481 | 60 |
| Example 13 | 7.4 | 34 | 158 | Meta-type aramid | BaCO₃ | 0.30 | 63 | 9.4 | 8.0 | 5 | 559 | 51 |
| Comparative Example 1 | 7.4 | 34 | 158 | PVDF | BaSO₄ | 0.10 | 58 | 5.0 | 3.9 | 4 | 567 | 42 |
| Comparative Example 2 | 7.4 | 34 | 158 | PVDF | BaSO₄ | 0.60 | 58 | 5.0 | 3.9 | 4 | 432 | 88 |
| Comparative Example 3 | 7.4 | 34 | 158 | PVDF | Mg(OH) ₂ | 0.50 | 58 | 5.0 | 0 | 1 | 516 | 79 |
| Comparative Example 4 | 7.4 | 34 | 158 | PVDF | BaSO₄ | 0.30 | 4 | 3.5 | 0.3 | 1 | 411 | 82 |
| Comparative Example 5 | 7.4 | 34 | 158 | PVDF | BaSO₄ | 0.30 | 71 | 19.0 | 16.3 | 5 | 598 | 39 |
| Comparative Example 6 | 7.4 | 34 | 158 | Meta-type aramid | BaSO₄ | 0.10 | 63 | 6.0 | 5.1 | 4 | 602 | 35 |
| Comparative Example 7 | 7.4 | 34 | 158 | Meta-type aramid | BaSO₄ | 0.60 | 63 | 6.0 | 5.1 | 4 | 440 | 50 |
| Comparative Example 8 | 7.4 | 34 | 158 | Meta-type aramid | BaSO₄ | 0.30 | 4 | 3.0 | 0.3 | 1 | 441 | 67 |
| Comparative Example 9 | 7.4 | 34 | 158 | Meta-type aramid | BaSO₄ | 0.30 | 71 | 17.3 | 15.4 | 5 | 621 | 41 |
| Comparative Example 10 | 5.7 | 35 | 141 | Meta-type aramid | BaSO₄ | 0.05 | 63 | 3.8 | 3.2 | 3 | 493 | 38 |
| Comparative Example 11 | 5.7 | 35 | 141 | Meta-type aramid | BaSO₄ | 0.05 | 63 | 6.4 | 5.4 | 4 | 540 | 32 |
| Comparative Example 12 | 5.7 | 39 | 161 | Meta-type aramid | BaSO₄ | 0.05 | 63 | 6.4 | 5.4 | 4 | 408 | 39 |

The disclosure of Japanese Patent Application No. 2022-075141 filed on April 28, 2022 is incorporated herein by reference in its entirety.

All documents, patent applications, and technical standards described in this specification are incorporated herein by reference to the same extent as if each individual document, patent application, and technical standards were specifically and individually indicated to be incorporated herein by reference.

## Claims

1. A separator for a non-aqueous secondary battery, the separator comprising:
a porous substrate; and
a porous layer that is provided on one side or on both sides of the porous substrate, and that contains a resin and barium compound particles,
wherein the resin contains at least one selected from the group consisting of wholly aromatic polyamide, polyamideimide, poly-N-vinylacetamide, polyacrylamide, copolymerized polyether polyamide, polyimide, and polyetherimide,
wherein an average primary particle diameter, as measured according to the description, of the barium compound particles contained in the porous layer is from 0.30 µm to less than 0.50 µm, and
wherein a volume ratio of the barium compound particles to a volume of the porous layer excluding pores is more than 5% by volume and less than 70% by volume.

2. The separator for a non-aqueous secondary battery according to claim 1, wherein the barium compound particles contain barium sulfate particles.

3. The separator for a non-aqueous secondary battery according to claim 1 or 2, wherein the wholly aromatic polyamide is a meta type wholly aromatic polyamide.

4. The separator for a non-aqueous secondary battery according to any one of claims 1 to 3, wherein the wholly aromatic polyamide is polymetaphenylene isophthalamide or polyparaphenylene terephthalamide.

5. The separator for a non-aqueous secondary battery according to any one of claims 1 to 4, wherein a basis weight of the porous layer is 2.0 g/m² or more and 20.0 g/m² or less in total on both sides of the porous substrate, and the basis weight refers to a mass per unit area.

6. The separator for a non-aqueous secondary battery according to any one of claims 1 to 5, wherein a unit area weight, as measured according to the description, of the barium compound particles contained in the porous layer is 0.3 g/m² or more and 19.0 g/m² or less in total on both sides of the porous substrate.

7. A non-aqueous secondary battery that obtains electromotive force by doping and dedoping of lithium ions, the non-aqueous secondary battery comprising: a positive electrode; a negative electrode; and the separator for a non-aqueous secondary battery according to any one of claims 1 to 6, the separator being disposed between the positive electrode and the negative electrode.
